# EUROPEAN PATENT SPECIFICATION

(11) **EP 3 736 830 B1**
(45) Date of publication and mention of the grant of the patent: **03.01.2024**
(21) Application number: 18898735.8
(22) Date of filing: 13.11.2018
(51) Int. Cl.: H01B 1/06, C01D 15/04, H01M 4/36, H01M 4/525, H01M 4/62, H01M 10/052, H01M 10/0562, C01F 17/36

(54) **SOLID ELECTROLYTE MATERIAL AND BATTERY**
FESTELEKTROLYTMATERIAL UND BATTERIE
MATÉRIAU D'ÉLECTROLYTE SOLIDE, ET BATTERIE

(30) Priority: 05.01.2018 JP 2018000418
(43) Date of publication of application: 11.11.2020
(73) Proprietor: Panasonic Intellectual Property Management Co., Ltd., Osaka-shi, Osaka 540-6207 (JP)
(72) Inventor: SAKAI Akihiro, Osaka-shi, Osaka 540-6207 (JP); ASANO Tetsuya, Osaka-shi, Osaka 540-6207 (JP); SAKAIDA Masashi, Osaka-shi, Osaka 540-6207 (JP); NISHIO Yusuke, Osaka-shi, Osaka 540-6207 (JP); MIYAZAKI Akinobu, Osaka-shi, Osaka 540-6207 (JP); HASEGAWA Shinya, Osaka-shi, Osaka 540-6207 (JP)
(74) Representative: Grünecker Patent- und Rechtsanwälte PartG mbB
(86) International application number: PCT/JP2018/041891
(87) International publication number: WO 2019/135315

(56) References cited:
- WO-A1-2017/108105
- WO-A1-2017/154922
- WO-A1-2018/025582
- CN-A- 105 254 184
- JP-A- 2004 235 155
- JP-A- 2006 244 734
- JP-A- 2016 024 874
- US-A1- 2016 103 232
- JOHANN AMBROSIUS BARTH ET AL: "Ternary Halides of the A3 MX 6Type. VII. The Bromides Li3MBr6(M=Sm-Lu, Y): Synthesis", CRYSTAL STRUCTURE, JOURNAL OF INORGANIC AND GENERAL CHEMISTRY, vol. 623, 30 September 1997 (1997-09-30), pages 1352-1356, XP055600030, DOI: 10.1002/zaac.19976230905
- ANDREAS BOHNSACK ET AL: "Ternary Halides of the A3 MX 6 Type. VI. Ternary Chlorides of the Rare- Earth Elements with Lithium , Li", JOURNAL OF INORGANIC AND GENERAL CHEMISTRY, vol. 623, 30 September 1997 (1997-09-30), pages 1067-1073, XP055600040, DOI: 10.1002/chin.199739018
- BOHNSACK, A. et al.: "Ternary halides of the A3 MX 6 type. VII. The bromides Li3MBr6 (M=Sm-Lu, Y): Synthesis, crystal structure, and ionic mobility", Zeitschrift fur Anorganische und Allgemeine Chemie, vol. 623, 1997, pages 1352-1356, XP055600030, DOI: doi:10.1002/zaac.19976230905
- BOHNSACK, A. et al.: "Ternary halides of the A3 MX 6 type. VI. Ternary chlorides of the rare-earth elements with lithium, Li3MCl6 (M=Tb-Lu, Y, Sc): Synthesis, crystal structures, and ionic motion", Zeitschrift Für Anorganische und Allgemeine Chemie, vol. 623, 1997, pages 1067-1073, XP055600040, DOI: doi:10.1002/chin.199739018

## Description

### BACKGROUND

### 1. Technical Field

The present disclosure relates to a solid electrolyte material and a battery.

### 2. Description of the Related Art

Patent Literature 1 discloses an all-solid battery using a sulfide solid electrolyte.

Patent Literature 2 discloses an all-solid battery using, as a solid electrolyte, a halide including indium.

Non-Patent Literature 1 discloses Li₃YBr₆.

### CITATION LIST

### Patent Literature

Patent Literature 1: Japanese Patent Application Publication No. 2005-353309
Patent Literature 2: Japanese Patent Application Publication No. 2006-244734

### Non-Patent Literature

Non-patent Literature 1: Z. anorg. allg. Chem. 623 (1997), 1352

### SUMMARY

In the prior art, realization of a solid electrolyte material having high lithium ion conductivity is desired.

The solid electrolyte material in one aspect of the present disclosure is represented by the following composition formula (1):

Li₃YX₆ Formula (1)

where
X is two or more kinds of elements selected from the group consisting of Cl, Br, and I.

According to the present disclosure, a solid electrolyte material having high lithium ion conductivity can be realized.

### BRIEF DESCRIPTION OF THE DRAWINGS

FIG. 1 is a cross-sectional view showing a schematic configuration of a battery in a second embodiment.
FIG. 2 is a schematic diagram illustrating an evaluation method of ion conductivity.
FIG. 3 is a graph showing temperature dependence of the ion conductivity of solid electrolytes.
FIG. 4 is a graph showing an initial discharge characteristic.
FIG. 5 is a graph showing the temperature dependence of the ion conductivity of solid electrolytes.
FIG. 6 is a graph showing an initial discharge characteristic.

### DETAILED DESCRIPTION OF THE EMBODIMENTS

Hereinafter, embodiments of the present disclosure will be described with reference to the drawings.

### (First embodiment)

The solid electrolyte material in the first embodiment is a solid electrolyte material represented by the following composition formula (1):

Li₃YX₆ Formula (1)

where
X is two or more kinds of elements selected from the group consisting of Cl, Br, and I.

The crystal structure of the solid electrolyte material described in the first embodiment is modulated by doping, with yttrium cations (Y³⁺), the crystal structure having LiX (X is two or more kinds of elements selected from the group consisting of Cl, Br, and I) as a fundamental structure. Due to the difference in valence between Y and Li and satisfaction of electrical neutrality of the entire crystal, vacancies are generated in the crystal structure. The symmetry of the crystal structure is varied from the fundamental structure by stable arrangement of Li, Y, and the vacancy sites in the structure or by balance between the ionic radius of the anion and the ionic radius of the cation. Li ions are allowed to be conducted in the crystal through the vacancies generated in the varied crystal structure.

According to the above configuration, a halide solid electrolyte material having high lithium ion conductivity can be realized. In addition, a solid electrolyte material having a stable structure can be realized in the assumed operation temperature range of the battery (for example, within the range of -30 °C to 80 °C). In other words, the solid electrolyte material of the first embodiment does not have a configuration (for example, the configuration of Patent Literature 2) in which the phase transition temperature thereof is present in the operation temperature range of the battery. Thereby, even in an environment where there is a temperature change, high ion conductivity can be stably maintained without causing a phase transition to occur within the operation temperature range of the battery.

In addition, according to the above configuration, a solid electrolyte exhibiting high ion conductivity of not less than 1 × 10⁻⁴ S / cm can be realized, and an all-solid secondary battery excellent in a charge / discharge characteristic can be realized. Furthermore, by adjusting the composition, ion conductivity of more than 7 × 10⁻⁴ S / cm is achieved, and an all-solid secondary battery capable of being charged or discharged more rapidly can be realized.

Moreover, by using the solid electrolyte material of the first embodiment, an all-solid secondary battery which does not include sulfur can be realized. In other words, the solid electrolyte material of the first embodiment does not have a configuration (for example, the configuration of Patent Literature 1) in which hydrogen sulfide is generated if exposed to the air. As a result, an all-solid secondary battery which does not generate hydrogen sulfide and is excellent in safety can be realized.

In the solid electrolyte material in the first embodiment, X may include Br and Cl.

According to the above configuration, a solid electrolyte material having higher lithium ion conductivity can be realized.

The solid electrolyte material in the first embodiment may be represented by the following composition formula (2):

Li₃YBr₆₋ₓClₓ Formula (2).

In this case, in the composition formula (2), 0.5 ≤ x ≤ 5.5 may be satisfied.

According to the above configuration, a solid electrolyte material having higher lithium ion conductivity can be realized.

The solid electrolyte material in the first embodiment may satisfy 2.0 ≤ x ≤ 5.0 in the composition formula (2).

According to the above configuration, a solid electrolyte material having higher lithium ion conductivity can be realized.

In the solid electrolyte material in the first embodiment, X may include Br and I.

According to the above configuration, a solid electrolyte material having higher lithium ion conductivity can be realized.

In addition, the solid electrolyte material in the first embodiment may be represented by the following composition formula (3):

Li₃YBr₆₋ₓIₓ Formula (3).

In this case, 0.5 ≤ x ≤ 5.5 may be satisfied in the composition formula (3).

According to the above configuration, a solid electrolyte material having higher lithium ion conductivity can be realized.

The solid electrolyte material in the first embodiment may satisfy 1.0 ≤ x ≤ 3.0 in the composition formula (3).

According to the above configuration, a solid electrolyte material having higher lithium ion conductivity can be realized.

The solid electrolyte material in the first embodiment may be represented by the following composition formula (4):

Li₃YClₗBrₘIₙ Formula (4).

In this case, in the composition formula (4), I + m + n = 6 may be satisfied.

According to the above configuration, a solid electrolyte material having higher lithium ion conductivity can be realized.

The solid electrolyte material in the first embodiment may satisfy 0.5 < I < 5, 0.5 < m < 5, and 0.5 < n < 5 in the composition formula (4).

According to the above configuration, a solid electrolyte material having higher lithium ion conductivity can be realized.

The solid electrolyte material in the first embodiment may satisfy 1 ≤ I ≤ 4, 1 ≤ m ≤ 4, and 1 ≤ n ≤ 4 in the composition formula (4).

According to the above configuration, a solid electrolyte material having higher lithium ion conductivity can be realized.

The solid electrolyte material in the first embodiment may satisfy n = 1, 1 < I, and m < 4 in the composition formula (4).

According to the above configuration, a solid electrolyte material having higher lithium ion conductivity can be realized.

The solid electrolyte material in the first embodiment may satisfy n = 2, 1 < I, and 1 < m < 4 in the composition formula (4).

According to the above configuration, a solid electrolyte material having higher lithium ion conductivity can be realized.

The solid electrolyte material in the first embodiment may satisfy I = 2, m = 2, and n = 2 in the composition formula (4).

According to the above configuration, a solid electrolyte material having higher lithium ion conductivity can be realized.

A shape of the solid electrolyte material in the first embodiment is not particularly limited, and may be, for example, an acicular shape, a spherical shape, or an elliptical spherical shape. For example, the solid electrolyte material in the first embodiment may be particles. In addition, the solid electrolyte material in the first embodiment may be formed into a pellet shape or a plate shape by puressurized particles. In addition, the solid electrolyte material in the first embodiment may include a crystal phase or may include an amorphous phase.

For example, if the shape of the solid electrolyte material in the first embodiment is particulate (for example, spherical), the median diameter thereof may be not less than 0.1 µm and not more than 100 µm.

In addition, in the first embodiment, the median diameter may be not less than 0.5 µm and not more than 10 µm.

According to the above configuration, ion conductivity can be further improved. In addition, a better dispersion state of the solid electrolyte material in the first embodiment and an active material can be formed.

In the first embodiment, the solid electrolyte material may have a smaller median diameter than the active material.

According to the above configuration, a better dispersed state of the solid electrolyte material in the first embodiment and the active material can be formed.

### <Manufacturing method of Solid electrolyte material>

The solid electrolyte material in the first embodiment may be manufactured by the following method, for example.

Binary halide raw material powders are prepared so as to provide a blending ratio of a target composition. For example, if Li₃YBr₃Cl₃ is produced, LiBr and YCl₃ are prepared in a molar ratio of 3:1. The raw materials are not particularly limited. For example, LiCI, Lil, YBrs, or YI₃ may be used in addition to the above-described raw materials. At this time, X in the composition formula (1) can be determined by selecting the kinds of the raw material powders. In addition, the above-mentioned values of "x", "I", "m", and "n" can be adjusted by adjusting the raw materials and the molar ratio. After mixing the raw material powders well, the raw material powders are mixed and ground using a mechanochemical milling method to react. Alternatively, the raw material powders may be mixed well and then sintered in a vacuum or in an inert atmosphere such as an argon / nitrogen atmosphere.

Thereby, the solid electrolyte material including the crystal phase as described above is provided.

In addition, the configuration (namely, the crystal structure) of the crystal phase in the solid electrolyte material can be determined by adjusting the reaction method and reaction conditions of the raw material powders.

### (Second embodiment)

Hereinafter, the second embodiment will be described. The description which has been set forth in the above-described first embodiment is omitted as appropriate.

The battery in the second embodiment is configured using the solid electrolyte material described in the first embodiment.

The battery in the second embodiment comprises a positive electrode, a negative electrode, and an electrolyte layer.

The electrolyte layer is a layer provided between the positive electrode and the negative electrode.

At least one of the positive electrode, the electrolyte layer, and the negative electrode includes the solid electrolyte material in the first embodiment.

According to the above configuration, the charge / discharge characteristic of the battery can be improved.

A specific example of the battery in the second embodiment will be described below.

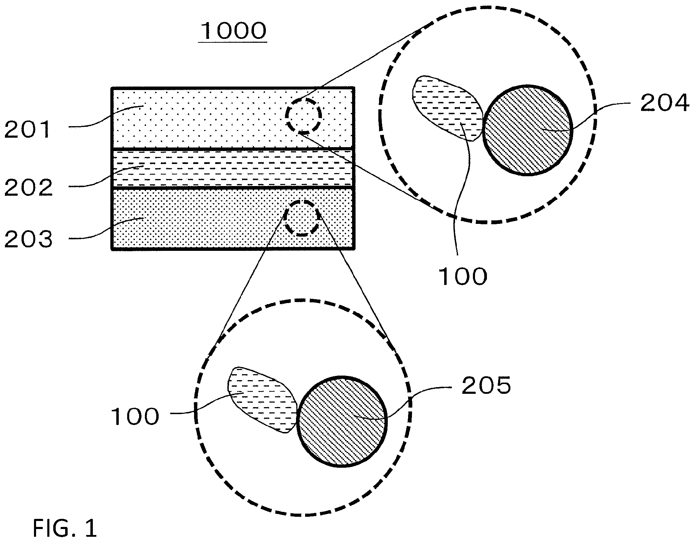

FIG. 1 is a cross-sectional view showing a schematic configuration of a battery 1000 in the second embodiment.

The battery 1000 in the second embodiment includes a positive electrode 201, a negative electrode 203, and an electrolyte layer 202.

The positive electrode 201 includes positive electrode active material particles 204 and solid electrolyte particles 100.

The electrolyte layer 202 is disposed between the positive electrode 201 and the negative electrode 203.

The electrolyte layer 202 includes an electrolyte material (for example, a solid electrolyte material).

The negative electrode 203 includes negative electrode active material particles 205 and the solid electrolyte particles 100.

The solid electrolyte particles 100 are particles each formed of the solid electrolyte material in the first embodiment or particles each including the solid electrolyte material in the first embodiment as a main component.

The positive electrode 201 includes a material having a characteristic of storing and releasing metal ions (for example, lithium ions). The positive electrode 201 includes, for example, a positive electrode active material (for example, the positive electrode active material particles 204).

Examples of the positive electrode active material include Li-containing transition metal oxides (e.g., Li(NiCoAl)O₂ or LiCoO₂), transition metal fluorides, polyanion materials, fluorinated polyanion materials, transition metal sulfides, transition metal oxyfluorides, transition metal oxysulfides, and transition metal oxynitrides.

A surface of the positive electrode active material may coated partially or entirely with an oxide which is different from the positive electrode active material in order to perform a higher performance battery operation. As a typical coating material, LiNbO₃ can be used. As long as the battery operation can be performed, the surface coating material is not limited to LiNbOs, and the coating method is not limited, either. Typically, the thickness of the coating material is desirably approximately 1 to 100 nm to realize a high-performance battery. Examples of the coating material include a Li-Nb-O compound such as LiNbOa, a Li-B-O compound such as LiBO₂ or Li₃BO₃, a Li-AI-O compound such as LiAlO₂, a Li-Si-O compound such as Li₄SiO₄, Li₂SO₄, a Li-Ti-O compound such as Li₄Ti₅O₁₂, a Li-Zr-O compound such as Li₂ZrO₃, a Li-Mo-O compound such as Li₂MoO₃, a Li-V-O compound such as LiV₂O₅, and a Li-W-O compound such as Li₂WO₄.

The median diameter of the positive electrode active material particles 204 may be not less than 0.1 µm and not more than 100 µm. If the median diameter of the positive electrode active material particles 204 is not less than 0.1 µm, the positive electrode active material particles 204 and the halide solid electrolyte material can form a good dispersion state in the positive electrode. As a result, the charge / discharge characteristic of the battery are improved. In addition, if the median diameter of the positive electrode active material particles 204 is not more than 100 µm, Li diffusion in the positive electrode active material particles 204 is accelerated. As a result, the battery can operate at a high output.

The median diameter of the positive electrode active material particles 204 may be larger than the median diameter of the halide solid electrolyte material. Thereby, the good dispersion state of the positive electrode active material particles 204 and the halide solid electrolyte material can be formed.

With regard to a volume ratio "v: 100-v" between the positive electrode active material particles 204 and the halide solid electrolyte material included in the positive electrode 201, 30 ≤ v ≤ 95 may be satisfied. In the case of 30 ≤ v, a sufficient battery energy density can be secured. In addition, if v ≤ 95, an operation at a high output can be realized.

The thickness of the positive electrode 201 may be not less than 10 µm and not more than 500 µm. If the thickness of the positive electrode is not less than 10 µm, a sufficient battery energy density can be ensured. If the thickness of the positive electrode is not more than 500 µm, an operation at a high output can be realized.

The electrolyte layer 202 is a layer including an electrolyte material. The electrolyte material is, for example, a solid electrolyte material. In other words, the electrolyte layer 202 may be a solid electrolyte layer.

The solid electrolyte layer may include the solid electrolyte material in the first embodiment as a main component. In other words, the solid electrolyte layer may include the solid electrolyte material in the above-described first embodiment, for example, at a weight ratio of not less than 50% (namely, not less than 50% by weight) with respect to the entire solid electrolyte layer.

According to the above configuration, the charge / discharge characteristic of the battery can be further improved.

In addition, the solid electrolyte layer may include the solid electrolyte material in the first embodiment described above, for example, at a weight ratio of not less than 70% (namely, not less than 70% by weight) with respect to the entire the solid electrolyte layer.

According to the above configuration, the charge / discharge characteristic of the battery can be further improved.

The solid electrolyte layer includes the solid electrolyte material in the above-described first embodiment as a main component, and may further include inevitable impurities, starting materials used when the solid electrolyte material is synthesized, byproducts, or decomposition products.

In addition, the solid electrolyte layer may include the solid electrolyte material in the first embodiment, for example, at a weight ratio of 100% (namely, 100% by weight) with respect to the entire solid electrolyte layer, excluding impurities mixed inevitably.

According to the above configuration, the charge / discharge characteristic of the battery can be further improved.

As described above, the solid electrolyte layer may be composed only of the solid electrolyte material in the first embodiment.

Alternatively, the solid electrolyte layer may be composed of only a solid electrolyte material different from the solid electrolyte material in the first embodiment. As the solid electrolyte material different from the solid electrolyte material in the first embodiment, for example, Li₂MgX₄, Li₂FeX₄, Li(AI, Ga, In)X₄, Li₃(Al, Ga, In)Xs, or LiI may be used. Here, X includes at least one selected from the group consisting of Cl, Br, and I.

The solid electrolyte layer may include simultaneously the solid electrolyte material in the first embodiment and the solid electrolyte material different from the solid electrolyte material in the first embodiment. At this time, both may be dispersed uniformly. Alternatively, the layer formed of the solid electrolyte material in the first embodiment and the layer formed of the solid electrolyte material different from the solid electrolyte material in the first embodiment may be sequentially arranged in the stacking direction of the battery.

The thickness of the solid electrolyte layer may be not less than 1 µm and not more than 100 µm. If the thickness of the solid electrolyte layer is not less than 1 µm, the positive electrode 201 and the negative electrode 203 are easily separated. In addition, if the thickness of the solid electrolyte layer is not more than 100 µm, an operation at a high output can be realized.

The negative electrode 203 includes a material having a characteristic of storing and releasing metal ions (for example, Li ions). The negative electrode 203 includes, for example, a negative electrode active material (for example, the negative electrode active material particles 205).

As the negative electrode active material, a metal material, a carbon material, an oxide, a nitride, a tin compound, or a silicon compound can be used. The metal material may be a single metal. Alternatively, the metal material may be an alloy. Examples of the metal material include lithium metal and a lithium alloy. Examples of the carbon material include natural graphite, coke, graphitized carbon, carbon fiber, spherical carbon, artificial graphite, and amorphous carbon. From the viewpoint of capacity density, silicon (Si), tin (Sn), a silicon compound, or a tin compound can be used. If a negative electrode active material having a low average reaction voltage is used, the effect of suppressing electrolysis by the solid electrolyte material in the first embodiment is better exhibited.

The median diameter of the negative electrode active material particles 205 may be not less than 0.1 µm and not more than 100 µm. If the median diameter of the negative electrode active material particles 205 is not less than 0.1 µm, the negative electrode active material particles 205 and the solid electrolyte particles 100 can form a good dispersion state in the negative electrode. As a result, the charge / discharge characteristic of the battery is improved. In addition, if the median diameter of the negative electrode active material particles 205 is not more than 100 µm, the lithium diffusion in the negative electrode active material particles 205 is accelerated. As a result, the battery can operate at a high output.

The median diameter of the negative electrode active material particles 205 may be larger than the median diameter of the solid electrolyte particles 100. As a result, the good dispersion state of the negative electrode active material particles 205 and the halide solid electrolyte material can be formed.

With regard to a volume ratio "v : 100-v" of the negative electrode active material particles 205 and the solid electrolyte particles 100 included in the negative electrode 203, 30 ≤ v ≤ 95 may be satisfied. In a case of 30 ≤ v, a sufficient battery energy density can be secured. In addition, if v ≤ 95, an operation at a high output can be realized.

The thickness of the negative electrode 203 may be not less than 10 µm and not more than 500 µm. If the thickness of the negative electrode is not less than 10 µm, the sufficient battery energy density can be secured. In addition, if the thickness of the negative electrode is not more than 500 µm, an operation at a high output can be realized.

At least one of the positive electrode 201, the electrolyte layer 202, and the negative electrode 203 may include a sulfide solid electrolyte or an oxide solid electrolyte for the purpose of improving ion conductivity. As the sulfide solid electrolyte, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ can be used. As the oxide solid electrolyte, a NASICON solid electrolyte such as LiTi₂(PO₄)₃ and its element substitution product, a (LaLi)TiO₃ perovskite solid electrolyte, a LISICON solid electrolyte such as Li₁₄ZnGe₄O₁₆, Li₄SiO₄, or LiGeO₄ and its element substitution product, a garnet solid electrolyte such as Li₇La₃Zr₂O₁₂ and its element substitution product, Li₃N and its H substitution product, or Li₃PO₄ and its N substitution product can be used.

At least one of the positive electrode 201, the electrolyte layer 202, and the negative electrode 203 may include an organic polymer solid electrolyte for the purpose of increasing ion conductivity. As the organic polymer solid electrolyte, for example, a compound of a polymer compound and a lithium salt can be used. The polymer compound may have an ethylene oxide structure. Since the polymer compound has the ethylene oxide structure, a large amount of lithium salt can be included, and the ion conductivity can be further increased. As the lithium salt, LiPFs, LiBF₄, LiSbFs, LiAsFs, LiSO₃CF₃, LiN(SO₂CF₃)₂, LiN(SO₂C₂F₅)₂, LiN(SO₂CF₃)(SO₂C₄F₉), or LiC(SO₂CF₃)₃ can be used. As the lithium salt, one lithium salt selected from these may be used alone. Alternatively, a mixture of two or more lithium salts selected from these may be used as the lithium salt.

At least one of the positive electrode 201, the electrolyte layer 202, and the negative electrode 203 may include a non-aqueous electrolyte solution, a gel electrolyte, and an ionic liquid for the purpose of facilitating exchange of lithium ions and improving the output characteristic of the battery.

The non-aqueous electrolyte solution includes a non-aqueous solvent and a lithium salt dissolved in the non-aqueous solvent. As the non-aqueous solvent, a cyclic carbonate solvent, a chain carbonate solvent, a cyclic ether solvent, a chain ether solvent, a cyclic ester solvent, a chain ester solvent, or a fluorine solvent can be used. Examples of the cyclic carbonate solvent include ethylene carbonate, propylene carbonate, and butylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorine solvent include fluoroethylene carbonate, methyl fluoropropionate, fluorobenzene, fluoroethyl methyl carbonate, and fluorodimethylene carbonate. As the non-aqueous solvent, one non-aqueous solvent selected from these can be used alone. Alternatively, a combination of two or more non-aqueous solvents selected from these can be used as the non-aqueous solvent. The non-aqueous electrolyte solution may include at least one fluorine solvent selected from the group consisting of fluoroethylene carbonate, methyl fluoropropionate, fluorobenzene, fluoroethyl methyl carbonate, and fluorodimethylene carbonate. As the lithium salt, LiPFs, LiBF₄, LiSbFs, LiAsFs, LiSO₃CF₃, LiN(SO₂CF₃)₂, LiN(SO₂C₂F₅)₂, LiN(SO₂CF₃)(SO₂C₄F₉), or LiC(SO₂CF₃)₃ can be used. As the lithium salt, one lithium salt selected from these may be used alone. Alternatively, a mixture of two or more lithium salts selected from these may be used as the lithium salt. The concentration of the lithium salt is, for example, in the range of 0.5 to 2 mol / liter.

As the gel electrolyte, a polymer material including the non-aqueous electrolyte solution can be used. As the polymer material, polyethylene oxide, polyacrylonitrile, polyvinylidene fluoride, polymethyl methacrylate, or a polymer having an ethylene oxide bond may be used.

The cation which forms the ionic liquid may be an aliphatic chain quaternary salt such as tetraalkylammonium or tetraalkylphosphonium, an aliphatic cyclic ammonium such as pyrrolidinium, morpholinium, imidazolinium, tetrahydropyrimidinium, piperazinium or piperidinium, or a nitrogen-including heterocyclic aromatic cation such as pyridinium or imidazolium. The anion which forms the ionic liquid may be PF₆⁻, BF₄-, SbF₆⁻, A_{S}F₆⁻, SO₃CF₃⁻, N(SO₂CF₃)₂⁻, N(SO₂C₂F₅)₂⁻, N(SO₂CF₃)(SO₂C₄F₉)⁻, or C(SO₂CF₃)₃⁻. The ionic liquid may include a lithium salt.

At least one of the positive electrode 201, the electrolyte layer 202, and the negative electrode 203 may include a binder for the purpose of improving adhesion between the particles. The binder is used to improve the binding property of the material which forms the electrode. The binders include polyvinylidene fluoride, polytetrafluoroethylene, polyethylene, polypropylene, aramid resin, polyamide, polyimide, polyamideimide, polyacrylonitrile, polyacrylic acid, methyl polyacrylate ester, ethyl polyacrylate eter, hexyl polyacrylate ester, polymethacrylic acid, methyl polymethacrylate ester, ethyl polymethacrylate ester, hexyl polymethacrylate ester, polyvinyl acetate, polyvinylpyrrolidone, polyether, polyethersulfone, hexafluoropolypropylene, styrene butadiene rubber, or carboxymethylcellulose. The binder may include a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. In addition, two or more kinds selected from these may be mixed and used as the binder.

In addition, at least one of the positive electrode 201 and the negative electrode 203 may include a conductive agent as necessary.

The conductive agent is used to lower electrode resistance. Examples of the conductive agent include graphite such as natural graphite or artificial graphite, carbon black such as acetylene black or ketjen black, a conductive fiber such as a carbon fiber or a metal fiber, carbon fluoride, metal powder such as aluminum, a conductive whisker such as zinc oxide or potassium titanate, a conductive metal oxide such as titanium oxide, or a conductive polymer compound such as polyaniline, polypyrrole, or polythiophene. In addition, cost reduction can be achieved by using the carbon conductive agent as the conductive agent.

Note that the battery in the second embodiment can be configured as a battery having various shapes such as a coin shape, a cylindrical shape, a prism shape, a sheet shape, a button shape, a flat shape, or a laminated shape.

### EXAMPLES

Hereinafter, details of the present disclosure will be described with reference to the inventive examples and comparative examples.

### « Inventive example 1 »

Hereinafter, a method for synthesizing and evaluating Li₃YBr₆₋ₓClₓ in the present example will be described.

### [Production of Solid Electrolyte Material]

In a glove box maintained in a dry and low-oxygen atmosphere with a dew point of -90 °C or less and an oxygen value of 5 ppm or less, raw material powders LiBr, YBr₃, LiCI, and YCl₃ were prepared so as to have a molar ratio of Li : Y : Br : Cl = 3 : 1: 6-x : x. These were ground and mixed in a mortar. Subsequently, milling processing was performed at 600 rpm for 25 hours using a planetary ball mill.

In the inventive examples 1-1 to 1-7, the values of x were 0.5, 1, 2, 3, 4, 5, and 5.5, respectively.

As a result, Li₃YBr₆₋ₓClₓ powders, which were the solid electrolyte materials of the inventive example 1, were provided.

### [Evaluation of Lithium Ion Conductivity]

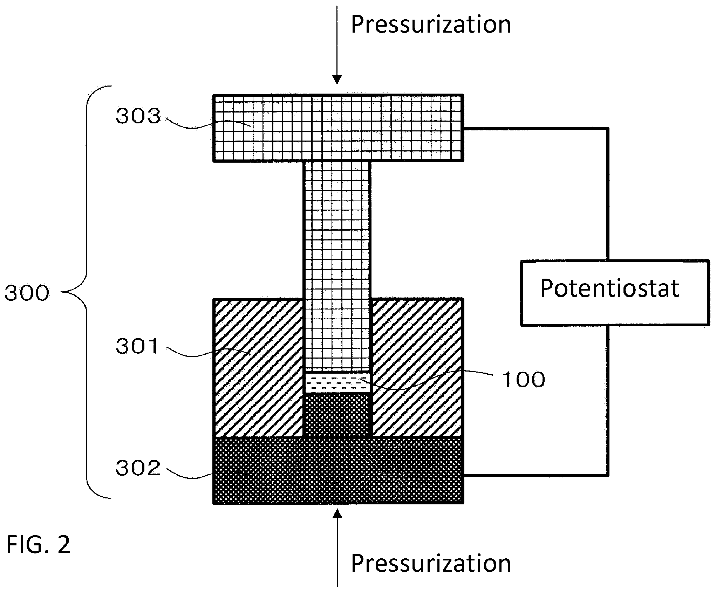

FIG. 2 is a schematic diagram showing an evaluation method of ion conductivity. A pressure-molding die 300 includes a frame 301 formed of an electronically insulating polycarbonate, an upper punch part 303 and a lower punch part 302, both of which are formed of electron conductive stainless steel.

Using the configuration shown in FIG. 2, the ion conductivity was evaluated by the following method. In a glove box maintained in a dry and low-oxygen atmosphere with a dew point of -90 °C or less and an oxygen value of 5 ppm or less, the inside of the pressure-molding die 300 was filled with the powder of the solid electrolyte material of the inventive example 1 (example of the solid electrolyte particles 100). The powder was pressurized uniaxially at 400 MPa to produce a conductivity measurement cell of the inventive example 1. In a pressurized state, lead wires were routed from the upper punch part 303 and the lower punch part 302, and connected to a potentiostat (Princeton Applied Research, VersaSTAT4) equipped with a frequency response analyzer. The ion conductivity at room temperature was measured by an electrochemical impedance measurement method.

The ion conductivity of the solid electrolyte materials of the inventive example 1 measured at 22 °C is shown in Table 1, which is shown below.

**[Table 1]**

| | Solid electrolyte material | Conductivity (Room temperature) (10⁻⁴ S/cm) | Phase Transition (Not more than 80 °C) |
|---|---|---|---|
| Inventive Example 1-1 | Li₃YBr_{5.5}Cl_{0.5} | 5.5 | None |
| Inventive Example 1-2 | Li₃YBr₅Cl | 5.9 | None |
| Inventive Example 1-3 | Li₃YBr₄Cl₂ | 7.5 | None |
| Inventive Example 1-4 | Li₃YBr₃Cl₃ | 8.0 | None |
| Inventive Example 1-5 | Li₃YBr₂Cl₄ | 9.7 | None |
| Inventive Example 1-6 | Li₃YBrCl₅ | 7.5 | None |
| Inventive Example 1-7 | Li₃YBr_{0.5}Cl_{5.5} | 6.9 | None |
| Referential Example 1-1 | Li₃YBr₆ | 4.0 | None |
| Referential Example 1-2 | Li₃YCl₆ | 5.0 | None |
| Comparative Example 1-1 | Li₃InBr₆ | <1E-3 | 55 °C |
| Comparative Example 1-2 | Li₂FeCl₄ | 8.7E-2 | None |

### [Evaluation of Phase Transition]

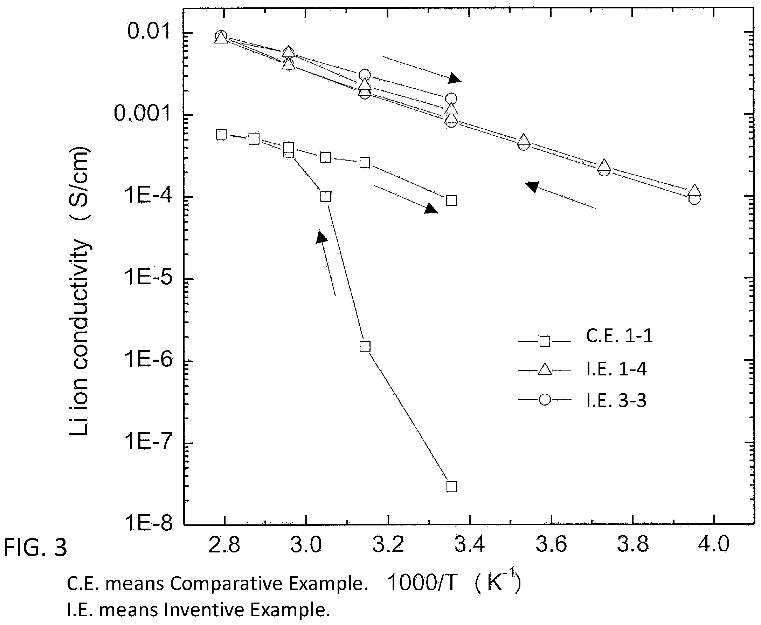

FIG. 3 is a graph showing temperature dependence of the ion conductivity of solid electrolytes. FIG. 3 shows the measurement result of the inventive example 1-4 (x=3, Li₃YBr₃Cl₃) as a typical behavior of the inventive example 1. Within the temperature range from -30 °C to 80 °C, in all the inventive examples 1-1 to 1-7, no sudden change in conductivity indicating a phase change (i.e., a phase transition) was observed.

The results shown in FIG. 3 were measured by the following method. The solid electrolyte materials of the inventive examples 1-1 to 1-7 which corresponded to a thickness of 700 µm were inserted into respective insulating outer cylinders. Each of the solid electrolyte materials was pressure-molded at a pressure of 40 MPa to provide solid electrolyte layers. Next, aluminum powder which corresponded to a thickness of 50 µm was stacked on the upper and lower surfaces of each of the solid electrolyte layers. Each of the solid electrolyte materials having the aluminum powder was pressure-molded at a pressure of 360 MPa to produce stacking structures. Next, stainless-steel current collectors were disposed on the upper and lower parts of each of the stacking structures, and current collector leads were attached to the current collectors. Finally, insulating ferrules were used to block and seal the insides of the insulating outer cylinders from the outside atmosphere. The test bodies each including the stacking structure provided by the above method were put in a thermostatic chamber, and the temperature dependence of the ion conductivity was measured in a temperature rising process and a temperature falling process.

### [Evaluation of Composition]

The solid electrolyte materials of the inventive example 1 were evaluated for the compositions thereof using ICP (Inductively Coupled Plasma) emission spectroscopy. As a result, in each of the inventive examples 1-1 to 1-7, deviation of Li / Y from its charged composition was within 3%. In other words, it can be said that the charged composition with the planetary ball mill was almost the same as the composition of the solid electrolyte material described in each of the inventive examples.

Hereinafter, a method for synthesizing and evaluating solid electrolytes used as referential examples and comparative examples will be described.

### « Comparative example 1-1 »

In a glove box maintained in a dry and low-oxygen atmosphere with a dew point of -90 °C or less and an oxygen value of 5 ppm or less, raw material powders LiBr and InBr₃ were prepared in a molar ratio of LiBr : InBrs = 3:1. These were ground and mixed in a mortar. Then, the sample pressure-molded into a shape of a pellet was vacuum-sealed in a glass tube and sintered at 200 °C for 1 week.

As a result, Li₃InBr₆, which was the solid electrolyte material of the comparative example 1, was provided.

Except for the above method, the ion conductivity and the phase transition of the solid electrolyte material of the comparative example 1-1 were evaluated in the same manner as in the inventive example 1. The ion conductivity measured at 22 °C was less than 1 × 10⁻⁷ S / cm.

The temperature dependence of the ion conductivity of the solid electrolyte material of the comparative example 1-1 is shown in FIG. 3. As shown in FIG. 3, due to the temperature dependence of the conductivity, the conductivity was changed suddenly at around 55 °C during the temperature rising process. In other words, a phase change was observed in the solid electrolyte material of the comparative example 1-1.

### « Comparative example 1-2 »

LiCI and FeCl₂ were used as the raw material powders for a solid electrolyte, and mixed at a molar ratio of LiCI: FeCl₂ = 2:1. As a result, Li₂FeCl₄, which was the solid electrolyte material of the comparative example 1-2, was provided.

Except for this, the ion conductivity of the solid electrolyte material of the comparative example 1-2 was evaluated in the same manner as in the inventive example 1. The measured ion conductivity was 8.7 × 10⁻⁶ S / cm.

### « Referential example 1-1 »

In a glove box maintained in a dry and low-oxygen atmosphere with a dew point of -90 °C or less and an oxygen value of 5 ppm or less, raw material powders LiBr and YBr₃ were prepared in a molar ratio of Li : Y : Br = 3 : 1 : 6. These were ground and mixed in a mortar. Then, milling processing was performed at 600 rpm for 25 hours using a planetary ball mill.

As a result, a powder of Li₃YBr₆, which was the solid electrolyte material of the referential example 1-1, was provided.

The ion conductivity measured at 22 °C was 4.0 × 10⁻⁴ S / cm.

### « Referential example 1-2 »

In a glove box maintained in a dry and low-oxygen atmosphere with a dew point of -90 °C or less and an oxygen value of 5 ppm or less, raw material powders LiCI and YCl₃ were prepared in a molar ratio of Li : Y : Cl = 3 : 1 : 6. These were ground and mixed in a mortar. Then, milling processing was performed at 600 rpm for 25 hours using a planetary ball mill.

As a result, powder of Li₃YCl₆, which was the solid electrolyte material of the referential example 1-2, was provided.

The ion conductivity measured at 22 °C was 5.0 × 10⁻⁴ S / cm.

### « Discussion »

As understood from the comparison of the inventive examples 1-1 to 1-7 to the comparative example 1-1, it can be seen that the phase transition does not occur in the solid electrolytes of the inventive examples 1-1 to 1-7 within the range of -30 °C to 80 °C, whereas the phase transition occurs in the comparative example 1-1. In other words, it can be seen that the solid electrolyte of the present example has a stable structure in the assumed operation temperature range of the battery.

In addition, it can also be seen that, in each of the solid electrolyte materials described in the inventive examples 1-1 to 1-7, higher ion conductivity of not less than 5.5 × 10⁻⁴ S / cm is exhibited at 22 °C. Among the present examples, it can be seen that higher ion conductivity is exhibited particularly at 2.0 ≤ × ≤ 5.0.

### <Inventive example 2>

Hereinafter, a method for producing and evaluating secondary batteries using Li₃YBr₆₋ₓClₓ in the present example will be described.

### [Production of Solid Electrolyte Material]

In a glove box maintained in a dry and low-oxygen atmosphere with a dew point of -90 °C or less and an oxygen value of 5 ppm or less, the solid electrolyte material Li₃YBr₆₋ₓClₓ of the inventive example 1 and LiCoO₂, which was the positive electrode active material, were prepared at a volume ratio of 30:70. These were mixed in an agate mortar to prepare a positive electrode mixture.

The solid electrolyte materials of the inventive example 1 each of which corresponded to a thickness of 700 µm, and 12.3 mg of the positive electrode mixture were stacked in this order in respective insulating outer cylinders. Each of the solid electrolyte materials was pressure-molded at a pressure of 360 MPa to provide a positive electrode and a solid electrolyte layer.

Next, in each of the insulating outer cylinders, a metal In (thickness: 200 µm) was stacked on the opposite side to the side which was in contact with the positive electrode of the solid electrolyte layer. Each of the solid electrolyte layers having the positive electrode was pressure-molded at a pressure of 80 MPa to produce a stacking structure of the positive electrode, the solid electrolyte layer, and the negative electrode.

Next, stainless-steel current collectors were disposed on the upper and lower parts of each of the stacking structures, and current collector leads were attached to the current collectors. Finally, insulating ferrules were used to block and seal the insides of the insulating outer cylinders from the outside atmosphere.

Thus, the secondary batteries of the inventive example 2 were produced. The secondary batteries of the inventive examples 2-1 to 2-7 were produced using the solid electrolytes provided in the inventive examples 1-1 to 1-7, respectively.

### [Charge / Discharge Test]

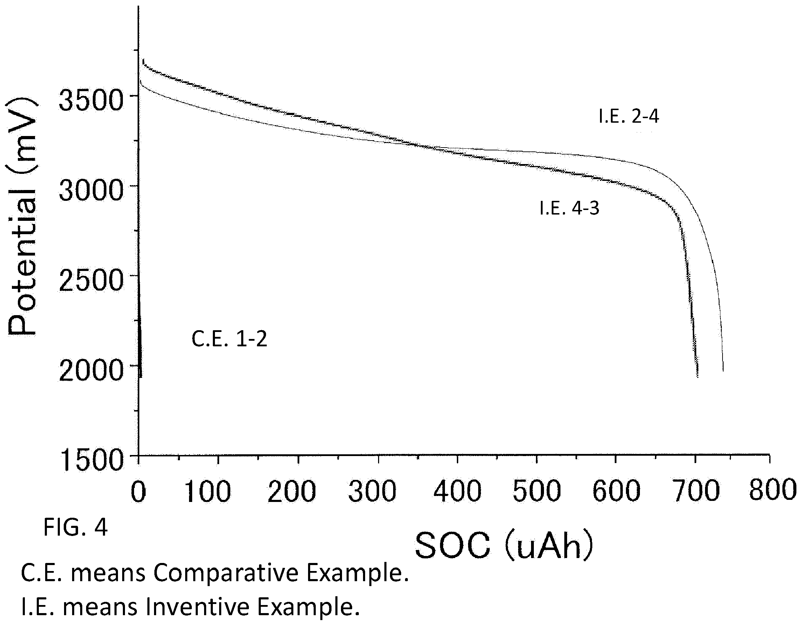

FIG. 4 shows a graph of the inventive example 2-4 (x=3, Li₃YBr₃Cl₃) as a typical initial discharge characteristic.

The results shown in FIG. 4 were provided by the following method. In other words, the secondary batteries of the inventive example 2 were disposed in a thermostatic chamber at 25 °C. Constant-current charge was performed at a current value of 0.05 C rate (20 hour rate) with respect to theoretical capacity of each of the batteries, and the charge was terminated at a voltage of 3.6 V. Next, each of the batteries was discharged at a current value of the same 0.05 C rate as the above, and the discharge was terminated at a voltage of 1.9 V. From the results of the measurements, the initial discharge capacities are provided.

The measurements were performed similarly in all the inventive examples 2-1 to 2-7, and the initial discharge capacities are shown in Table 2.

**[Table 2]**

| | Solid electrolyte material | Initial discharge capacity (µAh) |
|---|---|---|
| Inventive Example 2-1 | Li₃YBr_{5.5}Cl_{0.5} | 700 |
| Inventive Example 2-2 | Li₃YBr₅Cl | 750 |
| Inventive Example 2-3 | Li₃YBr₄Cl₂ | 720 |
| Inventive Example 2-4 | Li₃YBr₃Cl₃ | 730 |
| Inventive Example 2-5 | Li₃YBr₂Cl₄ | 800 |
| Inventive Example 2-6 | Li₃YBrCl₅ | 850 |
| Inventive Example 2-7 | Li₃YBr_{0.5}Cl_{5.5} | 850 |
| Comparative Example 2-1 | Li₂FeCl₄ | <1 |

Hereinafter, a method for producing and evaluating a secondary battery using a solid electrolyte as a comparative example will be described.

### « Comparative Example 2-1 »

The solid electrolyte material of the comparative example 1-2 was used as the solid electrolyte used for the positive electrode mixture and the solid electrolyte layer. Except for this, a secondary battery was produced and a charge / discharge test was conducted in the same manner as in the inventive example 2. The initial discharge characteristic of the secondary battery of the comparative example 2-1 is shown in FIG. 4.

The initial discharge capacity of the secondary battery of the comparative example 2-1 was less than 1 µAh. In other words, in the secondary battery of the comparative example 2-1, the charge / discharge operation failed to be observed.

### « Discussion »

Each of the batteries in which the solid electrolyte materials described in the present example were used exhibited a charge / discharge operation at room temperature. On the other hand, in the comparative example 2-1, the discharge capacity was hardly provided, and the battery operation failed to be observed.

From the above, it is shown that the solid electrolyte material according to the present disclosure is an electrolyte material that does not generate hydrogen sulfide and can stably maintain high lithium ion conductivity. Further, it is shown that an all-solid battery which does not generate hydrogen sulfide and is excellent in the charge / discharge characteristic can be realized.

### « Inventive example 3 »

Hereinafter, a method for synthesizing and evaluating Li₃YBr₆₋ₓIₓ in the present example will be described.

### [Production of Solid Electrolyte Material]

In a glove box maintained in a dry and low-oxygen atmosphere with a dew point of -90 °C or less and an oxygen value of 5 ppm or less, raw material powders LiBr, YBr₃, Lil, and YI₃ were prepared in a molar ratio of Li : Y : Br : I = 3 : 1 : 6-x : x. These were ground and mixed in a mortar. Subsequently, milling processing was performed at 600 rpm for 25 hours using a planetary ball mill.

The values of x in the inventive examples 3-1, 3-2, 3-3, 3-4, 3-5, 3-6 and 3-7 were x = 0.5, 1, 2, 3, 4, 5, and 5.5, respectively.

In this way, powders of Li₃YBr₆₋ₓIₓ, which were the solid electrolyte materials of the inventive example 3, were provided.

### [Evaluation of Lithium Ion Conductivity]

The evaluation of the ion conductivity in the present example was performed in the same manner as in the inventive example 1. Table 3 shows the measurement results of the ion conductivity.

**[Table 3]**

| | Solid electrolyte material | Conductivity (Room temperature) (10⁻⁴ S/cm) | Phase Transition (Not more than 80 °C) |
|---|---|---|---|
| Inventive Example 3-1 | Li₃YBr_{5.5}I_{0.5} | 6.1 | None |
| Inventive Example 3-2 | Li₃YBr₅I | 7.1 | None |
| Inventive Example 3-3 | Li₃YBr₄I₂ | 10.0 | None |
| Inventive Example 3-4 | Li₃YBr₃I₃ | 8.2 | None |
| Inventive Example 3-5 | Li₃YBr₂I₄ | 4.5 | None |
| Inventive Example 3-6 | Li₃YBrI₅ | 3.6 | None |
| Inventive Example 3-7 | Li₃YBr_{0.5}I_{5.5} | 3.2 | None |
| Referential Example 1-1 | Li₃YBr₆ | 4.0 | None |
| Comparative Example 3-1 | Li₃YI₆ | 0.5 | None |
| Comparative Example 1-1 | Li₃InBr₆ | <1E-3 | 55 °C |
| Comparative | Li₂FeCl₄ | 8.7E-2 | None |
| Example 1-2 | | | |

### [Evaluation of Phase Transition]

The phase transition of the present example was evaluated in the same manner as in the inventive example 1. As a result, within the temperature range of -30 °C to 80 °C, no rapid change in conductivity indicating a phase change (i.e., a phase transition) was observed in all the inventive examples 3-1 to 3-7. FIG. 3 shows the measurement result of the inventive example 3-3 (x = 2: Li₃YBr₄I₂) as a typical behavior of the inventive example 3.

### [Evaluation of Composition]

Composition analysis of the solid electrolyte materials of the inventive example 3 was performed by the ICP method. As a result, in each of the inventive examples 3-1 to 3-7, the deviation of Li / Y from the charged composition was within 3%. As a result, the charged composition with the planetary ball mill would be almost the same as the composition of the solid electrolyte material described in the inventive example.

Hereinafter, a method for synthesizing and evaluating a solid electrolyte as a comparative example will be described.

### « Comparative example 3-1 »

In a glove box maintained in a dry and low-oxygen atmosphere with a dew point of -90 °C or less and an oxygen value of 5 ppm or less, raw material powders LiI and YI₃ were prepared in a molar ratio Lil : YI₃ = 3 : 1. These were ground and mixed in a mortar. Subsequently, milling processing was performed at 600 rpm for 25 hours using a planetary ball mill.

As a result, a powder of Li₃YI₆, which was the solid electrolyte material of the comparative example 3-1, was provided.

Table 3 shows the ion conductivity provided in the same manner as in the inventive example 2.

### « Discussion »

As understood from the comparison of the inventive examples 3-1 to 3-7 to the comparative example 1-1, within the range of -30 °C to 80 °C, no phase transition occurred in the inventive examples 3-1 to 3-7 represented by Li₃YBr₆₋ₓIₓ, whereas the phase transition occurred in the comparative example 1-1. In other words, it can be seen that Li₃YBr₆₋ₓIₓ has a stable structure in the assumed operation temperature range of the battery.

Further, as understood from the comparison of the inventive examples 3-1 to 3-7 to the comparative example 3-1, at near room temperature, higher ion conductivity of not less than 1 × 10⁻⁴ S / cm is exhibited in the inventive examples 3-1 to 3-7, whereas ion conductivity of less than 1 × 10⁻⁴ S / cm is exhibited in the comparative example 3-1. In addition, it can also be seen that higher ion conductivity than that in the referential example 1-1 is exhibited in 0.5 ≤ x ≤ 4.0 (See the inventive examples 3-1 to 3-5). In addition, in particular, it can also be seen that higher ion conductivity is exhibited in 1.0 ≤ x ≤ 3.0 (See the inventive examples 3-2 to 3-4).

### « Inventive example 4 »

Hereinafter, a method for producing and evaluating a secondary battery using Li₃YBr₆₋ₓIₓ in present example will be described.

### [Production of positive electrode active material coating layer]

In an argon glove box, 0.06 mg of a metal Li (manufactured by Honjo Chemical Corporation) and 2.87 mg of pentaethoxyniobium (manufactured by Kojundo Chemical Laboratory Co., Ltd.) were dissolved in 0.2 mL of super-dehydrated ethanol (manufactured by FUJIFILM Wako Pure Chemical Corporation) to provide a coating solution.

In an agate mortar, stirring was performed while the provided coating solution was gradually added to 100 mg of Li(NiCoAl)O₂, which was the positive electrode active material.

After all the coating solution was added, stirring was performed on a hot plate of 30 °C, until drying and solidification of all the coating solution were visually confirmed.

The dried and solidified powder was put in an alumina crucible and taken out in an air atmosphere.

Next, heat treatment was performed at 300 °C for 1 hour in an air atmosphere.

The powder after the heat treatment was reground in an agate mortar to provide a positive electrode active material of the inventive example 4 in which a coating layer was formed on the particle surface layer. In other words, a plurality of particles of the positive electrode active material were provided, and a coating layer was formed on at least a part of the particle surface of all or some of the plurality of the particles.

The material of the coating layer is LiNbOs.

### [Production of Secondary Battery]

Hereinafter, a method for producing and evaluating the secondary batteries of Li₃YBr₆₋ₓIₓ in the present example will be described.

In a glove box maintained in a dry and low-oxygen atmosphere with a dew point of -90 °C or less and an oxygen value of 5 ppm or less, the solid electrolyte material Li₃YBr₆₋ₓIₓ of the inventive example 3 and Li(NiCoAl)O₂, which was the positive electrode active material having particle surface coated with LiNbO₃ were prepared at a volume ratio of 30:70. These were mixed in an agate mortar to produce a positive electrode mixture.

The solid electrolyte materials of the inventive example 3 each of which corresponded to a thickness of 700 µm, and 12.3 mg of the positive electrode mixture were stacked in this order in respective insulating outer cylinders. Each of the solid electrolyte materials was pressure-molded at a pressure of 360 MPa to provide a positive electrode and a solid electrolyte layer.

Next, in each of the insulating outer cylinders, a metal In (thickness: 200 µm) was stacked on the opposite side to the side which was in contact with the positive electrode of the solid electrolyte layer. Each of the solid electrolyte layer having the positive electrode was pressure-molded at a pressure of 80 MPa to produce a stacking structure of the positive electrode, the solid electrolyte layer, and the negative electrode.

Next, stainless-steel current collectors were disposed on the upper and lower parts of each of the stacking structures, and current collector leads were attached to the current collectors. Finally, insulating ferrules were used to block and seal the insides of the insulating outer cylinders from the outside atmosphere.

Thus, the secondary batteries of the inventive examples 4 were produced. The secondary batteries were produced in the inventive examples 4-1 to 4-7 using the solid electrolytes provided in the inventive examples 3-1 to 3-7, respectively.

### [Charge / Discharge Test]

FIG. 4 shows a graph of the inventive example 4-3 (x = 2: Li₃YBr₄I₂) as a typical initial discharge characteristic.

The results shown in FIG. 4 were provided by the following method. In other words, the secondary batteries of the inventive examples 4 were disposed in a thermostatic chamber at 25 °C. Constant-current charge was performed at a current value of 0.05 C rate (20 hour rate) with respect to theoretical capacity of each of the batteries, and the charge was terminated at a voltage of 3.7 V. Next, each of the batteries was discharged at a current value of the same 0.05 C rate as the above, and the discharge was terminated at a voltage of 1.9 V. From the results of the measurements, the initial discharge capacities are provided.

The measurements were performed similarly in all the inventive examples 4-1 to 4-7, and the initial discharge capacities are shown in Table 4.

**[Table 4]**

| | Solid electrolyte material | Initial discharge capacity (µAh) |
|---|---|---|
| Inventive Example 4-1 | Li₃YBr_{5.5}I_{0.5} | 800 |
| Inventive Example 4-2 | Li₃YBr₅I | 810 |
| Inventive Example 4-3 | Li₃YBr₄I₂ | 700 |
| Inventive Example 4-4 | Li₃YBr₃I₃ | 680 |
| Inventive Example 4-5 | Li₃YBr₂I₄ | 400 |
| Inventive Example 4-6 | Li₃YBrI₅ | 200 |
| Inventive Example 4-7 | Li₃YBr_{0.5}I_{5.5} | 100 |
| Comparative Example 2-1 | Li₂FeCl₄ | <1 |

### « Discussion »

Each of the batteries in which the solid electrolyte materials described in the present example exhibited a charge / discharge operation at room temperature. On the other hand, in the comparative example 2-1, the discharge capacity was hardly provided, and the battery operation failed to be observed.

From the above, it is shown that the solid electrolyte material according to the present disclosure is an electrolyte material that does not generate hydrogen sulfide and can stably maintain high lithium ion conductivity. Further, it is shown that an all-solid battery which does not generate hydrogen sulfide and is excellent in the charge / discharge characteristic can be realized.

### « Inventive example 5 »

Hereinafter, a method for synthesizing and evaluating Li₃Y(Br, Cl, I)₆ in the present example will be described.

### [Production of Solid Electrolyte Material]

In a glove box maintained in a dry and low-oxygen atmosphere with a dew point of -90 °C or less and an oxygen value of 5 ppm or less, raw material powders LiBr, YBrs, LiCI, YCl₃, Lil, and YI₃ were prepared in a molar ratio of Li : Y : CI : Br: I = 3 : 1 : l : m : n. In other words, Li₃YClₗBrₘIₙ (l + m + n = 6) was prepared. These were ground and mixed in a mortar. Subsequently, milling processing was performed at 600 rpm for 25 hours using a planetary ball mill.

In this way, the solid electrolyte materials of the inventive example 5 were provided. The values of I, m, and n in the inventive examples 5-1 to 5-10 are shown in Table 5.

**[Table 5]**

| | Solid electrolyte material | Conductivity (Room temperature ) (10⁻⁴ S/cm) | Phase Transition (Not more than 80 °C) |
|---|---|---|---|
| Inventive Example 5-1 | Li₃YCl₄BrI | 21.7 | None |
| Inventive Example 5-2 | Li₃YCl₃Br₂I | 19.2 | None |
| Inventive Example 5-3 | Li₃YCl₃BrI₂ | 10.1 | None |
| Inventive Example 5-4 | Li₃YCl₂Br₃I | 19.5 | None |
| Inventive Example 5-5 | Li₃YCl₂Br₂I₂ | 33.0 | None |
| Inventive Example 5-6 | Li₃YCl₂BrI₃ | 5.0 | None |
| Inventive Example 5-7 | Li₃YClBr₄I | 15.1 | None |
| Inventive Example 5-8 | Li₃YClBr₃I₂ | 17.1 | None |
| Inventive Example 5-9 | Li₃YClBr₂I₃ | 15.1 | None |
| Inventive Example 5-10 | Li₃YClBrI₄ | 9.8 | None |

### [Evaluation of Ion Conductivity]

Using the configuration shown in FIG. 2, the ion conductivity was evaluated by the following method. In a glove box maintained in a dry and low-oxygen atmosphere with a dew point of -90 °C or less and an oxygen value of 5 ppm or less, the inside of the pressure-molding die 300 was filled with the powder of the solid electrolyte material of the inventive example 5 (example of the solid electrolyte particles 100). The powder was pressurized uniaxially at 400 MPa to produce a conductivity measurement cell of the inventive example 5. In a pressurized state, lead wires were routed from the upper punch part 303 and the lower punch part 302, and connected to a potentiostat (Princeton Applied Research, VersaSTAT4) equipped with a frequency response analyzer. The ion conductivity at room temperature was measured by an electrochemical impedance measurement method. Table 5 shows the ion conductivity of the solid electrolyte materials of the inventive example 5 measured at 22°C.

### [Evaluation of Phase Transition]

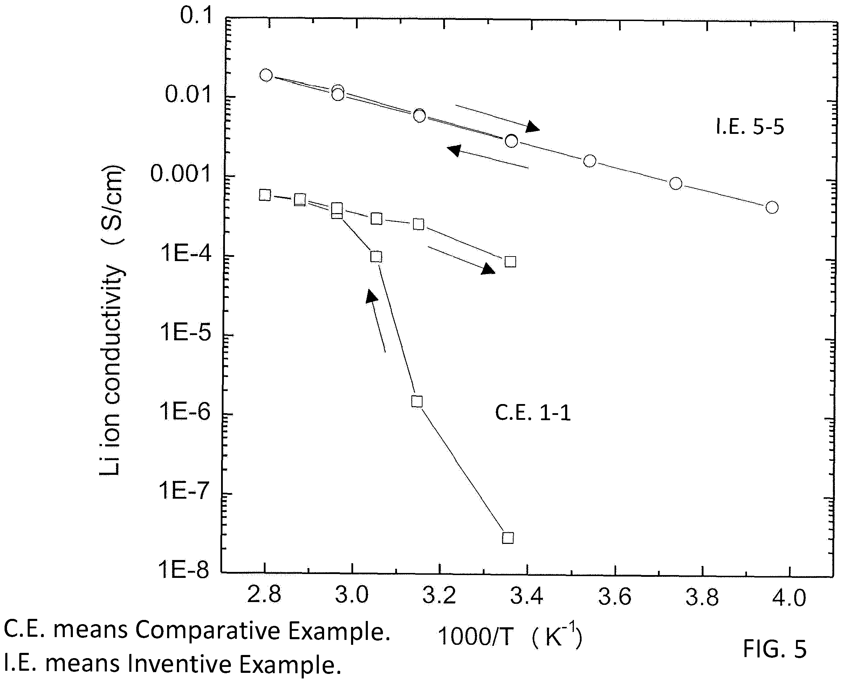

FIG. 5 is a graph showing temperature dependence of the ion conductivity of solid electrolytes. FIG. 5 shows the measurement result of the inventive example 5-5 (Li₃YBr₂Cl₂I₂) as a typical behavior of the inventive example 5. Within the temperature range from -30 °C to 80 °C, in all the inventive examples 5-1 to 5-10, no sudden change in conductivity indicating a phase change (i.e., a phase transition) was observed.

The results shown in FIG. 5 were measured by the following method. The solid electrolyte materials of the inventive examples 5-1 to 5-10 each of which corresponded to a thickness of 700 µm were inserted into respective insulating outer cylinders. Each of the solid electrolyte materials was pressure-molded at a pressure of 40 MPa to provide solid electrolyte layers. Next, aluminum powder which corresponded to a thickness of 50 µm was stacked on the upper and lower surfaces of each of the solid electrolyte layers. Each of the solid electrolyte layers having the aluminum powder was pressure-molded at a pressure of 360 MPa to produce stacking structures. Next, stainless-steel current collectors were disposed on the upper and lower parts of each of the stacking structures, and current collector leads were attached to the current collectors. Finally, insulating ferrules were used to block and seal the insides of the insulating outer cylinders from the outside atmosphere. The test bodies each including the stacking structure provided by the above method were put in a thermostatic chamber, and the temperature dependence of the ion conductivity was measured in a temperature rising process and a temperature falling process.

### [Evaluation of Composition]

The solid electrolyte materials of the inventive example 5 were evaluated for the compositions thereof using the ICP (Inductively Coupled Plasma) emission spectroscopy. As a result, in each of the inventive examples 5-1 to 5-10, the deviation of Li / Y from its charged composition was within 3%. In other words, it can be said that the charged composition with the planetary ball mill was almost the same as the composition of the solid electrolyte material described in each of the inventive examples.

### [Production of Coating layer of Positive electrode active material used for production of Secondary battery]

In an argon glove box, 0.06 mg of a metal Li (manufactured by Honjo Chemical Corporation) and 2.87 mg of pentaethoxyniobium (manufactured by Kojundo Chemical Laboratory Co., Ltd.) were dissolved in 0.2 mL of super-dehydrated ethanol (manufactured by FUJIFILM Wako Pure Chemical Corporation) to provide a coating solution.

In an agate mortar, stirring was performed while the provided coating solution was gradually added to 100 mg of Li(NiCoAl)O₂, which was the positive electrode active material, while the provided coating solution was added gradually.

After all the coating solution was added, stirring was performed on a hot plate of 30 °C, until drying and solidification of all the coating solution were visually confirmed.

The dried and solidified powder was put in an alumina crucible and taken out in an air atmosphere.

Next, heat treatment was performed at 300 °C for 1 hour in an air atmosphere.

The powder after the heat treatment was reground in an agate mortar to provide a positive electrode active material of the inventive example 5 in which a coating layer was formed on the particle surface layer. In other words, a plurality of particles of the positive electrode active material were provided, and a coating layer was formed on at least a part of the particle surface of all or some of the plurality of the particles. The material of the coating layer is LiNbOs.

### [Production of Secondary Battery]

Hereinafter, the production and evaluation methods for the secondary batteries in the present example will be described.

In a glove box maintained in a dry and low-oxygen atmosphere with a dew point of -90 °C or less and an oxygen value of 5 ppm or less, the solid electrolyte material Li₃YClₗBrₘIₙ of the inventive example 5 and Li(NiCoAl)O₂, which was the positive electrode active material having particle surface coated with LiNbOs, were prepared at a volume ratio of 30:70. These were mixed in an agate mortar to produce a positive electrode mixture.

The solid electrolyte materials of the inventive example 5 each of which corresponded to a thickness of 700 µm, and 12.3 mg of the positive electrode mixture were stacked in this order in respective insulating outer cylinders. Each of the solid electrolyte materials was pressure-molded at a pressure of 360 MPa to provide a positive electrode and a solid electrolyte layer.

Next, in each of the insulating outer cylinders, a metal In (thickness: 200 µm) was stacked on the opposite side to the side which was in contact with the positive electrode of the solid electrolyte layer. Each of the solid electrolyte layers having the positive electrode and the metal In was pressure-molded at a pressure of 80 MPa to produce a stacking structure of the positive electrode, the solid electrolyte layer, and the negative electrode.

Next, stainless-steel current collectors were disposed on the upper and lower parts of each of the stacking structures, and current collector leads were attached to the current collectors. Finally, insulating ferrules were used to block and seal the insides of the insulating outer cylinders from the outside atmosphere.

Thus, the secondary batteries using the materials of the inventive example 5 were produced.

### [Charge / Discharge Test]

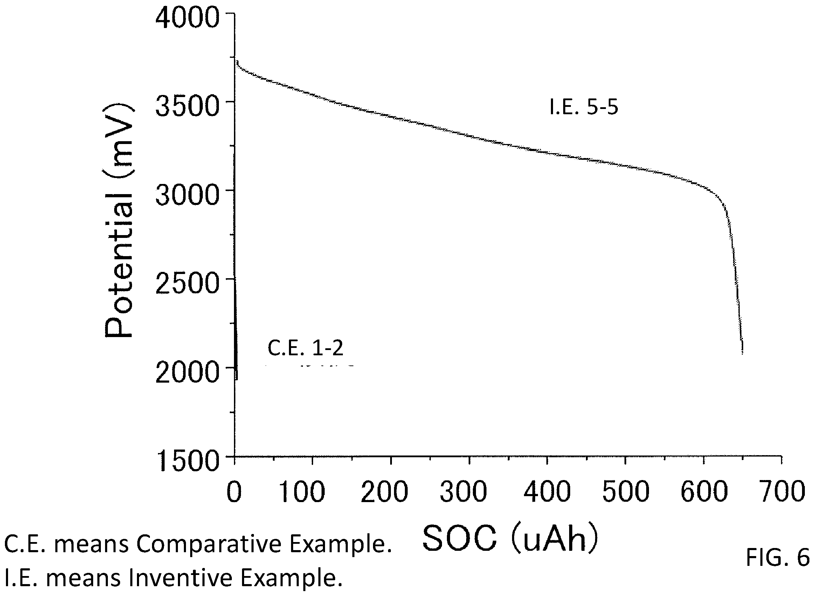

FIG. 6 shows a graph of the inventive example 5-5 (I = m = n = 2: Li₃YCl₂Br₂I₂) as a typical initial discharge characteristic. The results shown in FIG. 6 were provided by the following method. In other words, the secondary batteries of the inventive examples 5 were disposed in a thermostatic chamber at 25 °C. Constant-current charge was performed at a current value of 0.05 C rate (20 hour rate) with respect to theoretical capacity of each of the batteries, and the charge was terminated at a voltage of 3.7 V. Next, each of the batteries was discharged at a current value of the same 0.05 C rate as the above, and the discharge was terminated at a voltage of 1.9 V. In FIG. 6, in the inventive example 5-5, an initial discharge capacity of 650 µAh was provided. Using the above method, the same measurement was performed in all of the inventive examples 5-1 to 5-10. In each of the inventive examples 5-1 to 5-4 and 5-6 to 5-10, a good discharge capacity which was the same as that in the inventive example 5-5 was provided.

### « Discussion »

As understood from the comparison of the inventive examples 5-1 to 5-10 to the comparative example 1-1, it can be seen that no phase transition occurs in the solid electrolytes of the present examples within the range of -30 °C to 80 °C, whereas the phase transition occurs in the solid electrolyte of the comparative example 1-1. In other words, it can be seen that the structure is stable in the assumed operation temperature range of the battery in the inventive examples 5-1 to 5-10.

In addition, it can also be seen that the higher ion conductivity of not less than 5 × 10⁻⁴ S/cm at 22°C is exhibited in all the inventive examples 5-1 to 5-10. Further, the conductivity of not less than 1 × 10⁻³ S / cm is exhibited within the range of n = 1, 1 < I, and m < 4 in Li₃YClₗBrₘIₙ (see the inventive examples 5-1, 5-2, and 5-4). In addition, also within the range of n = 2, 1 ≤ I, and 1 < m < 4 in Li₃YClₗBrₘIₙ, the conductivity is not less than 1 × 10⁻³ S / cm (see the inventive examples 5-5 and 5-8). Further, if m = n = I = 2, the conductivity of 3.3 × 10⁻³ S / cm was provided (see the inventive example 5-5).

In addition, in each of the solid electrolyte materials of the present inventive example, the charging / discharging operation of the battery was observed at room temperature. On the other hand, in the comparative example 1-2, the discharge capacity was hardly provided, and the battery operation failed to be observed.

From the above, it is shown that the solid electrolyte material according to the present disclosure is an electrolyte material that does not generate hydrogen sulfide and can stably maintain high lithium ion conductivity. Further, it is shown that an all-solid battery which does not generate hydrogen sulfide and is excellent in the charge / discharge characteristic can be realized.

### INDUSTRIAL APPLICABILITY

The battery of the present disclosure can be used as, for example, an all-solid lithium secondary battery.

### REFERENTIAL SIGNS LIST

- 100: Solid electrolyte particles
- 201: Positive electrode
- 202: Electrolyte layer
- 203: Negative electrode
- 204: Positive electrode active material particle
- 205: Negative electrode active material particle
- 300: Pressure-molding die
- 301: Frame
- 302: Lower punch part
- 303: Upper punch part
- 1000: Battery

## Claims

1. A solid electrolyte material represented by the following composition formula (1):
Li₃YX₆ Formula (1)
where
X is two or more kinds of elements selected from the group consisting of Cl, Br, and I.

2. The solid electrolyte material according to claim 1, wherein X includes Br and Cl.

3. The solid electrolyte material according to claim 2, represented by the following composition formula (2):
Li₃YBr₆₋ₓClₓ Formula (2)
where
0.5 ≤ x ≤ 5.5.

4. The solid electrolyte material according to claim 3, wherein
2.0 ≤ x ≤ 5.0 is satisfied.

5. The solid electrolyte material according to claim 1, wherein
X includes Br and I.

6. The solid electrolyte material according to claim 5, represented by the following composition formula (3):
Li₃YBr₆₋ₓIₓ Formula (3)
where
0.5 ≤ x ≤ 5.5.

7. The solid electrolyte material according to claim 6, wherein
1.0 ≤ x ≤ 3.0 is satisfied.

8. The solid electrolyte material according to claim 1, represented by the following composition formula (4):
Li₃YClₗBrₘIₙ Formula (4)
where
I + m + n = 6.

9. The solid electrolyte material according to claim 8, wherein
0.5 < I < 5, 0.5 < m < 5, and 0.5 < n < 5 are satisfied.

10. The solid electrolyte material according to claim 9, wherein
1 ≤ I ≤ 4, 1 ≤ m ≤ 4, and 1 ≤ n ≤ 4 are satisfied.

11. The solid electrolyte material according to claim 10, wherein
n = 1, 1 < I, and m < 4 are satisfied.

12. The solid electrolyte material according to claim 10, wherein
n = 2, 1 ≤ I, and 1 < m < 4 are satisfied.

13. The solid electrolyte material according to claim 12, wherein
I = 2 and m = 2 are satisfied.

14. A battery, comprising:
a positive electrode;
a negative electrode; and
an electrolyte layer provided between the positive electrode and the negative electrode,
wherein
at least one selected from the group consisting of the positive electrode, the negative electrode, and the electrolyte layer includes the solid electrolyte material according to any one of claims 1 to 13.

15. The battery according to claim 14, wherein
the positive electrode includes a particle formed of a positive electrode active material; and
the particle is coated at least partially with an oxide.

16. The battery according to claim 15, wherein
the positive electrode active material is Li(NiCoAl)O₂.

17. The battery according to claim 16, wherein
the oxide is LiNbO₃.

## Patentansprüche

1. Festelektrolytmaterial, dargestellt durch die folgende Zusammensetzungsformel (1):
Li₃YX₆ Formel (1)
wobei
X zwei oder mehrere Arten von Elementen ist, die aus der Gruppe ausgewählt sind, die aus Cl, Br und I besteht.

2. Das Festelektrolytmaterial nach Anspruch 1, wobei
X Br und CI beinhaltet.

3. Das Festelektrolytmaterial nach Anspruch 2, dargestellt durch die folgende Zusammensetzungsformel (2):
Li₃YBr₆₋ₓClₓ Formel (2)
wobei
0,5 ≤ x ≤ 5,5.

4. Das Festelektrolytmaterial nach Anspruch 3, wobei
2,0 ≤ x ≤ 5,0 erfüllt ist.

5. Das Festelektrolytmaterial nach Anspruch 1, wobei
X Br und I beinhaltet.

6. Das Festelektrolytmaterial nach Anspruch 5, dargestellt durch die folgende Zusammensetzungsformel (3):
Li₃YBr₆₋ₓIₓ Formel (3)
wobei
0,5 ≤ x ≤ 5,5.

7. Das Festelektrolytmaterial nach Anspruch 6, wobei
1,0 ≤ x ≤ 3,0 erfüllt ist.

8. Das Festelektrolytmaterial nach Anspruch 1, dargestellt durch die folgende Zusammensetzungsformel (4):
Li₃YClₗBrₘIₙ Formel (4)
wobei
I + m + n = 6.

9. Das Festelektrolytmaterial nach Anspruch 8, wobei
0,5 < I < 5, 0,5 < m < 5, und 0,5 < n < 5 erfüllt sind.

10. Das Festelektrolytmaterial nach Anspruch 9, wobei
1 ≤ I ≤ 4, 1 ≤ m ≤ 4, und 1 ≤ n ≤ 4 erfüllt sind.

11. Das Festelektrolytmaterial nach Anspruch 10, wobei
n = 1, 1 < I, und m < 4 erfüllt sind.

12. Das Festelektrolytmaterial nach Anspruch 10, wobei
n = 2, 1 ≤ I, und 1 < m < 4 erfüllt sind.

13. Das Festelektrolytmaterial nach Anspruch 12, wobei
I = 2 und m = 2 erfüllt sind.

14. Batterie, umfassend:
eine positive Elektrode;
eine negative Elektrode; und
eine Elektrolytschicht, die zwischen der positiven Elektrode und der negativen Elektrode angebracht ist,
wobei
mindestens eines aus der Gruppe bestehend aus der positiven Elektrode, der negativen Elektrode und der Elektrolytschicht das Festelektrolytmaterial nach irgendeinem der Ansprüche 1 bis 13 beinhaltet.

15. Die Batterie nach Anspruch 14, wobei
die positive Elektrode ein Teilchen beinhaltet, das aus einem positiven Elektroden-Aktivmaterial gebildet ist; und
das Teilchen ist zumindest teilweise mit einem Oxid beschichtet.

16. Die Batterie nach Anspruch 15, wobei
das positive Elektrode-Aktivmaterial Li(NiCoAl)O₂ ist.

17. Die Batterie nach Anspruch 16, wobei
das Oxid LiNbOa ist.

## Revendications

1. Matériau d'électrolyte solide représenté par la formule compositionnelle (1) suivante :
Li₃YX₆ Formule (1)
où
X est deux ou plusieurs types d'éléments choisis dans le groupe constitué par CI, Br et I.

2. Matériau d'électrolyte solide selon la revendication 1, dans lequel
X comprend Br et Cl.

3. Matériau d'électrolyte solide selon la revendication 2, représenté par la formule compositionnelle (2) suivante :
Li₃YBr₆₋ₓClₓ Formule (2)
où
0,5 ≤ x ≤ 5,5.

4. Matériau d'électrolyte solide selon la revendication 3, dans lequel
2,0 ≤ x ≤ 5,0 est satisfait.

5. Matériau d'électrolyte solide selon la revendication 1, dans lequel
X comprend Br et I.

6. Matériau d'électrolyte solide selon la revendication 5, représenté par la formule compositionnelle (3) suivante :
Li₃YBr₆₋ₓIₓ Formule (3)
où
0,5 ≤ x ≤ 5,5.

7. Matériau d'électrolyte solide selon la revendication 6, dans lequel 1,0 ≤ x ≤ 3,0 est satisfait.

8. Matériau d'électrolyte solide selon la revendication 1, représenté par la formule compositionnelle (4) suivante :
Li₃YClₗBrₘIₙ Formule (4)
où
l + m + n = 6.

9. Matériau d'électrolyte solide selon la revendication 8, dans lequel 0,5 < l < 5, 0,5 < m < 5 et 0,5 < n < 5 sont satisfaits.

10. Matériau d'électrolyte solide selon la revendication 9, dans lequel 1 ≤ l ≤ 4, 1 ≤ m ≤ 4 et 1 ≤ n ≤ 4 sont satisfaits.

11. Matériau d'électrolyte solide selon la revendication 10, dans lequel n = 1, 1 < l et m < 4 sont satisfaits.

12. Matériau d'électrolyte solide selon la revendication 10, dans lequel n = 2, 1 ≤ l et 1 < m < 4 sont satisfaits.

13. Matériau d'électrolyte solide selon la revendication 12, dans lequel l = 2 et m = 2 sont satisfaits.

14. Batterie, comprenant :
une électrode positive ;
une électrode négative ; et
une couche d'électrolyte placée entre l'électrode positive et l'électrode négative,
dans laquelle
au moins un élément choisi dans le groupe constitué par l'électrode positive, l'électrode négative et la couche d'électrolyte comprend le matériau d'électrolyte solide selon l'une quelconque des revendications 1 à 13.

15. Batterie selon la revendication 14, dans laquelle
l'électrode positive comprend une particule formée d'un matériau actif d'électrode positive ; et
la particule est revêtue au moins partiellement d'un oxyde.

16. Batterie selon la revendication 15, dans laquelle
le matériau actif d'électrode positive est Li(NiCoAl)O₂.

17. Batterie selon la revendication 16, dans laquelle
l'oxyde est LiNbOs.
